# DEMANDE DE BREVET EUROPEEN

(11) **EP 3 964 284 A1**
(43) Date de publication de la demande: **09.03.2022**
(21) Numéro de dépôt: 21194229.7
(22) Date de dépôt: 01.09.2021
(51) Int. Cl.: B01J 13/00, H01L 41/00, H01B 1/00

(54) **FABRICATION D'UN AÉROGEL À GRADIENT DE CONDUCTION ÉLECTRIQUE**

(30) Priorité: 03.09.2020 FR 2008936
(71) Demandeur: Commissariat à l'Energie Atomique et aux Energies Alternatives, 75015 Paris (FR)
(72) Inventeur: CELLE, Caroline, 38054 GRENOBLE CEDEX 09 (FR); SIMONATO, Jean-Pierre, 38054 GRENOBLE CEDEX 09 (FR); TOURON, Maribel, 38054 GRENOBLE CEDEX 09 (FR)
(74) Mandataire: Nony

(57) **Abrégé**

La présente invention concerne un procédé de préparation d'un aérogel, présentant un gradient de conduction électrique, comprenant au moins les étapes suivantes :
(i) disposer d'une formulation comprenant au moins un polysaccharide solubilisé et des nanoobjets métalliques en dispersion dans un milieu solvant aqueux ou hydroalcoolique, lesdits nanoobjets métalliques présentant un facteur de forme supérieur ou égal à 2, en particulier étant des nanofils métalliques ;
(ii) laisser la formulation de l'étape (i) décanter dans des conditions propices à l'établissement d'un gradient de concentration en nanoobjets au sein de la matrice polymérique formée par le ou lesdits polysaccharides ; et
(iii) éliminer ledit milieu solvant par lyophilisation pour obtenir ledit aérogel présentant un gradient vertical de conduction électrique.

## Description

### Domaine technique

La présente invention se rapporte à de nouveaux aérogels présentant un gradient de teneur contrôlé en nanoobjets métalliques à facteur de forme élevé, en particulier de type nanofils métalliques, induisant un gradient de conduction électrique, et à leur procédé de préparation.

### Technique antérieure

Les matériaux aérogels présentent des propriétés intéressantes du fait de leurs porosités très élevées, associées à de faibles densités et de grandes surfaces spécifiques. La croisée du monde des aérogels et de celui des matériaux composites ouvre de nouvelles perspectives de développement de matériaux innovants dans des domaines variés, tels que le domaine de la santé ou encore de l'énergie, et ce à travers notamment le développement de capteurs ([1]). Il est en effet intéressant de tirer profit des synergies possibles entre ces matériaux ultralégers et les nanomatériaux ([2]).

Les aérogels à base de cellulose, nanocellulose et ses dérivés (carboxyméthyl cellulose (CMC), hydroxyéthyl cellulose (HEC), etc.) sont bien connus et très largement décrits dans la littérature ([3], [4]).

D'autre part, la compatibilité des dérivés de la cellulose et des nanofils métalliques est également bien documentée dans la littérature. Par exemple, les documents WO2018/159593 et WO2012/118582 décrivent des formulations associant des nanofils ou nanofibres métalliques, par exemple d'argent, et des dérivés cellulosiques.

La fabrication de matériaux électriquement conducteurs poreux, homogènes et isotropes, est également connue. Il peut s'agir par exemple d'aérogels purement métalliques, par exemple à base de nanofils métalliques, comme décrit dans le document FR 3 070 973 ou encore de matériaux hybrides avec des matrices polymériques chargées en nanoparticules métalliques, par exemple à base de poly(alcool vinylique) (PVA) et de nanofils de cuivre [5], de poly(alcool vinylique) (PVA) et de nanofils d'argent [6] ou encore de polyuréthane et de nanofils d'argent [7]. Cependant, les aérogels obtenus ne donnent pas satisfaction en termes de propriétés combinées de tenue mécanique et conduction électrique.

Des structures présentant des variations de conduction électrique ont déjà été proposées. Par exemple, le document WO 2015/183382 rapporte la préparation d'un aérogel électriquement conducteur présentant un fil métallique de type acier inoxydable, nickel chrome ou platine intégré dans une matrice polymérique obtenue par pyrolyse à partir d'une solution de formaldéhyde et de résorcinol. On peut également citer le document KR 20190033259 qui propose une structure multicouche présentant notamment une couche poreuse isolante connectée par des adhésifs conducteurs à une mousse conductrice par application de pression. Le matériau ainsi formé présente donc une discontinuité de propriétés et une conduction uniquement dans le plan de l'empilement.

Enfin, il a déjà été décrit des matériaux composites non poreux à base de polyuréthane présentant une distribution en nanotubes de carbone dispersés en gradient ([8]).

A la connaissance des inventeurs, il n'a encore jamais été proposé de matériaux poreux, monobloc, présentant un gradient de conduction électrique.

La présente demande a précisément pour objet de proposer une nouvelle voie pour accéder à des aérogels présentant un gradient de conduction électrique.

Plus précisément, la présente invention propose, par décantation de nanocharges métalliques dans une matrice polymère, avant sublimation du solvant, d'accéder à un aérogel poreux présentant un gradient de conduction électrique.

### Résumé de l'invention

Ainsi, l'invention concerne, selon un premier de ses aspects, un procédé de préparation d'un aérogel, présentant un gradient de conduction électrique, comprenant au moins les étapes suivantes :
(i) disposer d'une formulation comprenant au moins un polysaccharide solubilisé et des nanoobjets métalliques en dispersion dans un milieu solvant aqueux ou hydroalcoolique, lesdits nanoobjets métalliques présentant un facteur de forme supérieur ou égal à 2, en particulier étant des nanofils métalliques ;
(ii) laisser la formulation de l'étape (i) décanter dans des conditions propices à l'établissement d'un gradient de concentration en nanoobjets au sein de la matrice polymérique formée par le ou lesdits polysaccharides ; et
(iii) éliminer ledit milieu solvant par lyophilisation pour obtenir ledit aérogel présentant un gradient vertical de conduction électrique.

En particulier, les nanoobjets métalliques considérés selon l'invention présentent un facteur de forme strictement supérieur à 2, en particulier supérieur ou égal à 10, notamment supérieur ou égal à 50 et plus particulièrement compris entre 100 et 40 000.

Selon un mode de réalisation particulier, il s'agit de nanofils métalliques, en particulier présentant une longueur moyenne comprise entre 1 µm et 1000 µm, notamment entre 2 µm et 500 µm, et un diamètre moyen compris entre 20 nm et 500 nm, en particulier entre 30 nm et 100 nm.

L'invention concerne encore, selon un autre de ses aspects, un aérogel monobloc, à gradient de conduction électrique, en particulier tel qu'obtenu à l'issue du procédé de l'invention, comprenant des nanoobjets métalliques présentant un facteur de forme supérieur ou égal à 2, en particulier tels que décrits précédemment, dans une matrice polymérique à base de polysaccharide(s), ledit aérogel présentant un gradient de concentration desdits nanoobjets métalliques.

Par « aérogel », on entend désigner un matériau ultra-poreux, autrement dit un matériau solide présentant une porosité supérieure ou égale à 95 %, en particulier supérieure ou égale à 98 %, autrement dit composé à plus de 95 %, notamment plus de 98 % de gaz, en particulier d'air.

On peut également désigner ce matériau ultra-poreux sous les termes « mousse », « éponge », « mousse composite » ou « éponge composite ».

Par « monobloc », on entend signifier que l'aérogel selon l'invention se présente sous la forme d'une pièce en un unique bloc. En particulier, il est distinct de structures présentant au moins deux couches juxtaposées et présentant au moins une interface.

Ainsi, un aérogel formé selon l'invention ne présente pas d'interface dans son volume. Il est en particulier sans discontinuité dans ses propriétés autres que les propriétés de conductivité électrique.

De manière avantageuse, l'aérogel selon l'invention est autosupporté.

L'aérogel formé selon l'invention est caractérisé par un gradient de concentration en nanoobjets métalliques, ce qui induit un gradient de conduction électrique.

Par « gradient de concentration », on entend signifier que la concentration massique en nanoobjets métalliques dans la formulation ou dans l'aérogel est croissante dans une direction donnée.

Observé dans sa position à l'issue de l'étape (iii), un aérogel selon l'invention présente plus particulièrement un gradient vertical de concentration en nanoobjets métalliques. Plus précisément, la concentration en nanoobjets métalliques décroît depuis la partie basse dudit aérogel jusqu'à sa face supérieure.

Ainsi, l'aérogel selon l'invention, en particulier tel qu'obtenu à l'issue de sa préparation en étape (iii) du procédé de l'invention, présente un gradient de conduction électrique. Plus précisément, l'aérogel présente une excellente conduction électrique dans une de ses zones (la zone inférieure pour l'aérogel dans sa position à l'issue de l'étape (iii) du procédé de l'invention), et une très faible conduction électrique, voire étant isolant dans une autre zone (la zone supérieure pour l'aérogel dans sa position à l'issue de l'étape (iii) du procédé de l'invention).

En particulier, par « gradient de conduction électrique », on entend signifier que la conduction électrique au niveau de l'aérogel formé selon l'invention décroît selon une direction verticale depuis la base de l'aérogel (face en regard avec le fond du récipient mis en œuvre pour sa préparation) jusqu'à sa face supérieure.

Cette variation de concentration en nanocharges métalliques dans l'aérogel n'impacte pas sur les autres propriétés de l'aérogel, en particulier en termes de densité et de propriétés mécaniques.

Ainsi, un aérogel selon l'invention présente avantageusement, sur l'ensemble de son volume, une densité inférieure ou égale à 0,1 g/cm3, en particulier inférieure ou égale à 0,05 g/cm3, notamment comprise entre 10 et 30 mg/cm³.

Comme illustré dans les exemples qui suivent, les aérogels obtenus selon l'invention présentent également de bonnes propriétés en termes de tenue mécanique et de flexibilité. Le procédé de l'invention permet ainsi d'accéder à des aérogels autosupportés présentant des propriétés de conduction modulables, ce qui les rend particulièrement adaptés pour leur intégration dans diverses applications.

L'aérogel peut se présenter sous la forme d'un article moulé en aérogel, présentant la forme et les dimensions souhaitées pour son application.

L'invention concerne ainsi, selon un autre de ses aspects, l'utilisation d'un aérogel selon l'invention, en particulier tel qu'obtenu selon le procédé de l'invention, en tant que film autosupporté conducteur utilisable comme couche de basse émissivité, par exemple pour réfléchir sélectivement le rayonnement infra-rouge pour une application pour des vitrages dits intelligents, film conducteur pour un dispositif chauffant, matériau pour un capteur de pression ou un capteur piézorésistif.

D'autres caractéristiques, variantes et avantages du procédé selon l'invention, et des aérogels à gradient de conduction électrique obtenus selon l'invention, ressortiront mieux à la lecture de la description et des exemples qui suivent, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] présente, de manière schématique, en vue de coupe, la structure d'un aérogel isolant, formé d'une matrice polymérique poreuse, non chargée en nanoobjets métalliques ;
[Fig 2] présente, de manière schématique, en vue de coupe, la structure d'un aérogel électriquement conducteur, présentant une distribution uniforme en nanoobjets métalliques au sein d'une matrice polymérique ;
[Fig 3] présente, de manière schématique, en vue de coupe, la structure d'un aérogel obtenu selon l'invention, présentant un gradient vertical de concentration en nanoobjets métalliques ;
[Fig 4] présente les photographies de l'aérogel préparé selon l'exemple 5, au cours de l'essai de compression manuelle.

### Description détaillée

### PREPARATION DE L'AEROGEL A GRADIENT DE CONDUCTION ELECTRIQUE

### Etape (i) : Formulation de nanoobjets métalliques et polymères cellulosiques

Comme indiqué précédemment, les aérogels à gradient de conduction selon l'invention sont préparés à partir d'une formulation comprenant, dans un milieu solvant aqueux ou hydroalcoolique, au moins :
- au moins un polysaccharide solubilisé ; et
- des nanoobjets métalliques à facteur de forme élevé, en particulier des nanofils métalliques, en dispersion.

### Polysaccharides (ou polymères de saccharide)

Le ou lesdits polysaccharides peuvent être plus particulièrement choisis parmi la cellulose et ses dérivés, notamment les éthers de cellulose tels que la carboxyméthylcellulose (CMC), l'hydroxyéthylcellulose (HEC), l'hydroxyméthylcellulose (HMC), l'hydroxypropylcellulose (HPC), l'hydroxypropyl méthyl cellulose (HPMC), l'hydroxyéthyl méthyl cellulose (HEMC) ; les nanocristaux de cellulose cristallins (NCC ou CNC), les microfibrilles (ou microfibres) de cellulose (MFC) semi-cristallines et nanofibrilles (ou nanofibres) de cellulose (NFC) ; la chitine, le chitosane, les alginates. Selon un mode de réalisation particulier, le ou lesdits polysaccharides sont choisis parmi la cellulose et ses dérivés, en particulier tels que définis précédemment ; les nanocristaux de cellulose cristallins (NCC ou CNC), les microfibrilles (ou microfibres) de cellulose (MFC) semi-cristallines et nanofibrilles (ou nanofibres) de cellulose (NFC) ; la chitine et le chitosane.

Selon un mode de réalisation particulier, le polysaccharide est choisi parmi la cellulose et ses dérivés, en particulier tels que décrits précédemment. En particulier, le polysaccharide peut être la carboxyméthylcellulose (CMC).

Selon un mode de réalisation particulier, le ou lesdits polysaccharides mis en œuvre selon l'invention peuvent présenter une masse moléculaire comprise entre 40 kg/mol et 1300 kg/mol, en particulier entre 90 et 700 kg/mol.

En particulier, le ou les polysaccharides mis en œuvre selon l'invention peuvent présenter un faible indice de polydispersité, notamment compris entre 0,1 et 2.

### Nanoobjets métalliques à facteur de forme élevé

Comme indiqué précédemment, les nanoobjets métalliques mis en œuvre selon l'invention présentent un facteur de forme élevé. Le facteur de forme correspond au rapport entre la plus grande dimension du nanoobjet, typiquement la longueur du nanofil et la plus petite dimension, telle que l'épaisseur d'un nanofil de type lamellaire ou le diamètre d'un nanofil de type cylindrique.

Les dimensions des nanoobjets métalliques peuvent être évaluées par microscopie électronique en transmission (TEM) ou par microscopie électronique à balayage (MEB). La dimension (diamètre, longueur) s'entend de la dimension moyenne (diamètre moyen, longueur moyenne) en nombre de l'ensemble des nanoobjets métalliques d'une population donnée.

Les nanoobjets métalliques présentent plus particulièrement un facteur de forme strictement supérieur à 2, en particulier supérieur ou égal à 10, notamment supérieur ou égal à 50 et plus particulièrement compris entre 100 et 40 000.

Selon un mode de réalisation particulier, les nanoobjets métalliques à facteur de forme élevé sont des nanofils métalliques.

Les nanofils métalliques peuvent être notamment de type lamellaire ou cylindrique, en particulier de type cylindrique.

Le ou les nano-fil(s) métallique(s) de l'invention ont typiquement au moins une de leurs dimensions de taille nanométrique (10⁻⁹ mètre), en particulier une de leurs dimensions inférieure ou égale à 100 nm.

De préférence, le ou les nano-fil(s) métallique(s) de l'invention peu(ven)t avoir au moins un de leurs dimensions allant de 20 à 800 nm.

En particulier, les nanofils métalliques peuvent présenter un diamètre moyen compris entre 20 nm et 500 nm, notamment entre 30 nm et 100 nm.

La longueur moyenne des nanofils peut être plus particulièrement comprise entre 1 µm et 1000 µm, en particulier entre 2 µm et 500 µm.

Il peut s'agir par exemple de nanofils de diamètre moyen de 60 nm et de longueur moyenne de 10 µm.

Les nanoobjets métalliques, en particulier les nanofils métalliques, sont formés d'un matériau métallique, qui peut être choisi parmi les métaux élémentaires (Cu, Ag, Au, Ni, Pd, Pt). Le matériau métallique peut également être un matériau bimétallique ou un alliage métallique qui comprend au moins deux types de métaux, par exemple le cupronickel (alliage de cuivre et de nickel).

De préférence, les nanoobjets métalliques, en particulier les nanofils, sont formés d'un ou plusieurs métaux. A titre d'exemple, on peut notamment citer l'argent, l'or, le cuivre, le nickel, les systèmes cœur-coquille ayant un cœur en cuivre, argent, nickel, platine ou palladium.

Selon un mode de réalisation particulier, les nanofils métalliques de l'invention sont des nanofils à base d'argent, d'or, de cuivre, de nickel, de palladium et/ou de platine, c'est-à-dire que leur composition massique comprend au moins 50 % en masse de l'un ou plusieurs de ces métaux. En particulier, les nanofils métalliques peuvent être des nanofils d'argent, d'or, de cuivre et/ou de nickel.

Selon un mode de réalisation particulier, les nanoobjets métalliques selon l'invention sont des nanofils d'argent.

Les nanofils peuvent être préalablement préparés selon des méthodes de synthèse classiques, connues de l'homme du métier ou décrites dans la littérature.

Les protocoles de synthèse des nanofils métalliques sont bien connus de l'homme du métier. D'une manière générale, ils mettent en œuvre la réduction de sels métalliques, par exemple du nitrate d'argent pour la synthèse de nanofils d'argent, par un polyol, typiquement l'éthylène glycol, en présence d'un agent de nucléation (généralement NaCl) et de polyvinylpyrrolidone (PVP). La PVP joue le rôle d'agent de blocage, capable de contrôler les vitesses de croissance des différentes surfaces de nanocristaux d'argent.

A titre d'exemple, les nanofils métalliques peuvent être synthétisés comme décrit dans la publication Toybou et al., Environ. Sci. : Nano, 2019, 6, 684 [9].

### Préparation de la formulation

La formulation en étape (i) du procédé de l'invention, comprenant au moins un polysaccharide, en particulier tel que décrit précédemment, et des nanoobjets métalliques en particulier de type nanofils tels que décrits précédemment, peut être avantageusement préparée par mélange :
- d'une solution du ou desdits polysaccharides dans un milieu solvant aqueux, noté S1 ; et
- d'une dispersion desdits nanoobjets métalliques, en particulier desdits nanofils métalliques, dans un milieu solvant, noté S2, aqueux, alcoolique ou hydroalcoolique.

Par « milieu solvant », on entend désigner un unique solvant ou un mélange d'au moins deux solvants. Par milieu solvant « aqueux », on entend signifier que le milieu solvant comprend au moins de l'eau.

La solution du ou desdits polysaccharides peut être préparée préalablement par solubilisation du ou desdits polysaccharide(s) dans un milieu solvant S1.

Il appartient à l'homme du métier d'adapter la nature du ou desdits solvants du milieu solvant S1 de manière, d'une part, à ce que le milieu solvant permette de solubiliser le ou lesdits polymères et, d'autre part, puisse être aisément éliminé par lyophilisation.

En particulier, le milieu solvant S1 présente avantageusement un point triple (point du diagramme de phase température-pression (P, T) où peuvent coexister les trois phases liquide, solide et gaz) proche de celui de l'eau pure (0,006 atm, 0,01°C), par exemple P compris entre 0,006 atm et 0,004 atm et T compris entre 0,01°C et -0,5°C.

Le milieu solvant S1 peut être formé d'eau et, éventuellement, d'un ou plusieurs solvants choisis parmi les alcools en particulier en C₁ à C₅, tels que le méthanol, l'éthanol, l'isopropanol, le tert-butanol, et leurs mélanges.

En particulier, le milieu solvant S1 peut être de l'eau, en particulier de l'eau déionisée.

Le ou lesdits polysaccharides peuvent être mis en œuvre à raison de 0,05 à 15 % massique, en particulier entre 0,3 et 2 % massique par rapport à la masse totale de ladite solution.

La dispersion des nanoobjets métalliques, en particulier de type nanofils, peut être préalablement préparée par dispersion des nanoobjets métalliques dans un milieu solvant S2. Le milieu solvant de la dispersion des nanoobjets métalliques est plus particulièrement de type aqueux, alcoolique ou hydroalcoolique. Il peut ainsi comprendre, voire être formé d'un ou plusieurs solvants choisis parmi l'eau, les alcools, en particulier en C₁ à C₅, tels que le méthanol, l'éthanol, l'isopropanol ou le tert-butanol, et leurs mélanges.

Selon un mode de réalisation particulier, le milieu solvant S2 est de l'eau, en particulier de l'eau déionisée.

Les nanoobjets métalliques, en particulier de type nanofils métalliques, peuvent être présents à raison de 0,01 à 20 % massique, en particulier de 0,5 à 10 % massique, dans la dispersion.

La préparation de la formulation en étape (i) selon l'invention à partir du mélange de la solution du ou desdits polysaccharides et de la dispersion des nanoobjets métalliques, permet d'assurer une bonne dispersion des nanoobjets métalliques sans agglomération et de conserver une bonne solubilisation du ou desdits polymères dans le milieu solvant de la formulation.

L'homme du métier est à même d'ajuster les teneurs et ratio massique en polysaccharide(s) et en nanoobjets métalliques, en particulier de type nanofils métalliques, au regard des propriétés souhaitées pour l'aérogel, en particulier au regard de la densité souhaitée pour l'aérogel et de ses propriétés mécaniques et de conductivité électrique.

La formulation aqueuse mise en œuvre en étape (i) du procédé de l'invention, en particulier résultant du mélange de la solution du ou desdits polysaccharides et de la dispersion des nanoobjets métalliques, peut comprendre une concentration (ou taux de charge) massique en nanoobjets métalliques, en particulier de type nanofils métalliques, comprise entre 0,01 et 10 %, en particulier entre 0,5 et 1 % massique, par rapport à la masse totale de ladite formulation.

La concentration massique en polysaccharide(s) de ladite formulation peut être comprise entre 0,05 % et 15 % massique, en particulier entre 0,3 et 2 % massique.

Selon un mode de réalisation particulier, la formulation mise en œuvre en étape (i) présente un rapport massique nanoobjets métalliques, en particulier nanofils métalliques/polysaccharide(s) compris entre 0,1 et 100, en particulier entre 0,3 et 5,0 et plus particulièrement entre 0,5 et 4.

Le milieu solvant aqueux de la formulation mise en œuvre en étape (i) du procédé de l'invention, en particulier résultant du mélange du ou desdits solvants S1 et S2 tels que décrits précédemment, comprend au moins de l'eau. Il peut comprendre, outre de l'eau, un ou plusieurs solvants choisis parmi les alcools, en particulier en C₁ à C₅, tels que décrits précédemment, par exemple le méthanol ou l'isopropanol.

Comme évoqué précédemment, le milieu solvant de la formulation en étape (i) présente avantageusement un point triple proche de celui de l'eau pure, afin de permettre une élimination aisée du ou desdits solvants par lyophilisation en étape (iii) du procédé de l'invention.

Le milieu solvant peut comprendre, outre le ou lesdits solvants, un ou plusieurs additifs solubilisés ou dispersés dans le ou lesdits solvants, pour autant qu'ils n'impactent pas sur la préparation et les propriétés de l'aérogel, en particulier sur le gradient de conduction électrique de l'aérogel selon l'invention.

Selon un mode de réalisation particulier, le milieu solvant peut comprendre au moins un additif cryoprotectant.

Le ou lesdits additifs cryoprotectants sont des composés solubles dans l'eau, et permettant d'abaisser le point de fusion de l'eau. De tels additifs cryoprotectants peuvent être par exemple choisis parmi le glycérol, l'éthylène glycol, le diméthylsulfoxyde (DMSO), le tert-butanol et leurs mélanges.

Par exemple, le ou lesdits additifs cryoprotectants peuvent être ajoutés, lors de la préparation d'une formulation selon l'invention, dans le ou lesdits solvants de la solution aqueuse du ou desdits polysaccharides.

Le ou lesdits additifs cryoprotectants peuvent être présents dans la formulation, à raison de 0,05 à 10 % massique, en particulier de 0,1 à 5 % massique, par rapport à la masse totale de ladite formulation.

Selon un mode de réalisation particulier, le milieu solvant aqueux de la formulation en étape (i) est formé d'eau, en particulier d'eau déionisée, et éventuellement d'un ou plusieurs additifs cryoprotectants.

Sauf indication contraire, on désigne ainsi par « milieu solvant » dans la suite du texte, le mélange d'un ou plusieurs solvants, en particulier tels que décrits ci-dessus avec, optionnellement, un ou plusieurs additifs, en particulier un ou plusieurs additifs cryoprotectants tels que définis ci-dessus.

Selon un mode de réalisation particulier, la formulation en étape (i) du procédé selon l'invention est formée d'un ou plusieurs polysaccharides, de nanoobjets métalliques, en particulier de nanofils métalliques, dans un milieu solvant aqueux tel que décrit ci-dessus formé d'un ou plusieurs solvants, de l'eau, notamment de l'eau déionisée et, optionnellement, d'un ou plusieurs additifs cryoprotectants.

Selon un mode de réalisation particulier, la formulation en étape (i) du procédé de l'invention présente une viscosité à 25 °C comprise entre 50 et 4 500 mPa.s, en particulier entre 400 et 1 500 mPa.s. La viscosité peut être mesurée par toute méthode classique connue de l'homme du métier, par exemple à l'aide d'un viscosimètre à rotation, à corps vibrant ou à tube capillaire.

### Etape (ii) : Décantation

Comme indiqué précédemment, la formulation de l'étape (i) est ensuite laissée à décanter, dans des conditions propices à l'établissement d'un gradient de concentration en nanoobjets métalliques au sein de la matrice polymérique formée par le ou lesdits polysaccharides. Cette décantation permet à une partie des nanoobj ets métalliques de la formulation de l'étape (i) de sédimenter au sein de la matrice polymérique visqueuse formée par le ou lesdits polysaccharides, et ainsi d'établir un gradient vertical de concentration en nanoobjets métalliques, en particulier de type nanofils.

La formulation peut être avantageusement laissée décanter dans un récipient, « moule », ayant la forme et les dimensions souhaitées pour l'aérogel.

Le moule, par exemple en Téflon^{®}, peut être de forme et taille variées, au regard de la forme et des dimensions souhaitées pour l'objet formé dudit aérogel.

L'aérogel autosupporté obtenu à l'issue du procédé de l'invention peut ainsi prendre la forme d'un article moulé.

Les conditions opératoires de la décantation, notamment en termes de durée, peuvent être ajustées pour obtenir le gradient de concentration en nanoobjets métalliques souhaité, permettant de conduire au gradient de conduction électrique souhaité au niveau de l'aérogel final, et notamment à la valeur de conductivité souhaitée dans la partie inférieure de l'aérogel formé.

La durée de décantation peut être inférieure ou égale à 200 heures, en particulier comprise entre 20 heures et 150 heures, notamment entre 12 heures et 120 heures.

La décantation est avantageusement opérée à température ambiante. Par « température ambiante », on entend une température de 20°C ± 5°C.

### Avantageusement, elle est opérée sans agitation de la formulation.

A l'issue de la phase de décantation, la formulation présente un gradient vertical de concentration en nanoobjets métalliques, en particulier en nanofils métalliques, dans la matrice polymérique visqueuse.

Par « gradient de concentration », on entend signifier que la concentration massique en nanoobjets métalliques dans la formulation ou dans l'aérogel est croissante dans une direction donnée. Un gradient vertical de concentration s'entend ainsi du fait que la concentration en nanoobjets métalliques est croissante selon une direction verticale.

Plus particulièrement, la formulation obtenue à l'issue de la décantation présente un gradient de concentration en nanoobjets métalliques décroissant depuis le fond du récipient jusqu'à la surface de la formulation.

Plus précisément, dans la partie inférieure du récipient (ou moule), la formulation obtenue à l'issue de la décantation est fortement chargée en nanoobjets métalliques du fait de la sédimentation des nanoobjets métalliques. En particulier, elle présente une concentration massique locale en nanoobjets métalliques, en particulier en nanofils métalliques, comprise entre 0,01 et 50 %, en particulier entre 0,1 et 30 %.

La « partie inférieure » peut représenter par exemple une hauteur, selon la direction verticale, représentant de 1 à 99 %, en particulier de 5 à 50 %, de la hauteur totale de la formulation. En revanche, dans sa partie supérieure, la formulation obtenue à l'issue de la décantation présente une faible teneur en nanoobjets métalliques, voire est exempte de nanofils métalliques. En particulier, elle peut présenter une concentration massique locale en nanoobjets métalliques inférieure ou égale à 10 %, en particulier inférieure ou égale à 1 % et plus particulièrement inférieure ou égale à 0,5 %.

La « partie supérieure » faiblement chargée en nanoobjets métalliques, voire exempte de nanoobjet métallique, peut représenter de 1 à 99 %, en particulier de 5 à 50 % de la hauteur totale de la formulation, donnée dans la direction verticale.

La formulation présente une zone intermédiaire entre la partie inférieure et la partie supérieure précitée, dans laquelle la formulation présente une concentration massique en nanoobjets métalliques intermédiaire entre la concentration massique de la zone inférieure et la concentration massique de la zone supérieure.

### Etape (iii) : séchage par lyophilisation

Dans une étape (iii) du procédé de l'invention, le milieu solvant de ladite formulation est éliminé par lyophilisation.

En particulier, l'étape (iii) est réalisée consécutivement à la sédimentation des nanoobjets métalliques au sein de la formulation en étape (ii).

L'élimination du milieu solvant est opérée dans des conditions permettant de conserver la structure et la cohésion de la phase solide de la formulation après sédimentation.

En particulier, les conditions du séchage en étape (iii) sont ajustées pour permettre une élimination du milieu solvant hors du réseau formé par la matrice en polysaccharides chargée en nanoobjets métalliques, sans exercer de contraintes capillaires importantes qui pourraient provoquer l'effondrement total ou partiel de la structure du réseau tridimensionnel, ou perturber le gradient de concentration en nanoobjets métalliques établi à l'issue de l'étape (ii) de décantation.

L'élimination du milieu solvant en étape (iii) est opérée par lyophilisation, encore appelée « cryodessiccation ».

Plus particulièrement, selon cette variante, l'élimination du milieu solvant pour former l'aérogel met en œuvre les étapes successives suivantes :
- solidification (congélation) du milieu solvant de ladite dispersion par abaissement de la température de ladite dispersion en-dessous du point de fusion dudit milieu solvant, c'est-à-dire en-dessous du point de fusion du ou desdits solvants et, le cas échéant, du ou desdits additifs ; et
- sublimation sous vide dudit milieu solvant solidifié pour former un aérogel.

Il est entendu que les conditions opératoires, pour la congélation et la sublimation du milieu solvant pour l'obtention d'un aérogel selon l'invention, sont ajustées au regard de la nature du milieu solvant de la formulation mise en œuvre.

La congélation du milieu solvant peut être typiquement opérée en portant la dispersion à une température inférieure ou égale à -10 °C, en particulier inférieure ou égale à -20 °C, notamment inférieure ou égale à -30 °C.

De préférence, la congélation du milieu solvant est opérée par refroidissement brutal (trempe) ou, alternativement, par un refroidissement lent.

Ce refroidissement peut être par exemple réalisé par immersion de la dispersion dans de l'azote liquide. Il peut encore être opéré à l'aide d'un bain de carboglace dans l'acétone ou par refroidissement sur un plateau refroidi, par exemple un plateau métallique refroidi.

L'élimination du milieu solvant solidifié est ensuite opérée par sublimation du milieu solvant. Les conditions de température et de pression sont ajustées pour permettre la sublimation du milieu solvant. En particulier, cette élimination est plus particulièrement opérée sous vide, notamment dans des conditions de pression inférieure ou égale à 10000 Pa, en particulier inférieure ou égale à 1000 Pa et plus particulièrement inférieure ou égale à 100 Pa.

Elle peut être opérée à une température comprise entre -100 et 0 °C, en particulier entre -90 et -30 °C.

La durée est ajustée de manière à éliminer plus de 95 % du milieu solvant, en particulier plus de 99 % du milieu solvant.

L'homme du métier est à même de mettre en œuvre un dispositif adéquat, par exemple un lyophilisateur adapté, pour l'élimination du milieu solvant.

### AEROGEL A GRADIENT DE CONDUCTION ELECTRIQUE

Le matériau sec obtenu à l'issue du séchage en étape (iii) est un aérogel.

Il se présente plus particulièrement sous la forme d'un réseau (ou matrice) tridimensionnel formé par le ou lesdits polysaccharide(s), chargé avec les nanoobjets métalliques à fort facteur de forme, en particulier de type nanofils métalliques.

Un aérogel selon l'invention comprend ainsi, en particulier est formé, du ou desdits polysaccharide(s), des nanoobjets métalliques à fort facteur de forme, en particulier de type nanofils métalliques, et d'un ou plusieurs gaz, en particulier de l'air.

L'aérogel obtenu présente une distribution inhomogène des nanoobjets métalliques à fort facteur de forme, en particulier des nanofils métalliques. Plus particulièrement, il présente un gradient de concentration massique en nanoobjets métalliques à fort facteur de forme, en particulier en nanofils métalliques, induisant avantageusement un gradient contrôlé de conduction électrique.

Ainsi, l'aérogel selon l'invention se distingue des aérogels conducteurs classiquement obtenus tels que décrits dans le document FR 3 070 973, présentant une structure homogène, et en particulier électriquement conducteur sur l'ensemble de leur volume.

En particulier, l'aérogel selon l'invention présente une zone de conductivité électrique élevée, et une zone non conductrice (isolante).

Plus particulièrement, observé dans sa position à l'issue de l'étape (iii), l'aérogel obtenu selon l'invention présente un gradient vertical de concentration en nanoobjets métalliques, et plus précisément un gradient de concentration décroissant depuis la base de l' aérogel (fond du récipient) vers sa face supérieure. Autrement dit, la concentration en nanoobjets métalliques diminue selon une direction verticale, depuis la base de l'aérogel (fond du récipient) vers sa face supérieure.

Dans la suite du texte, l'aérogel obtenu selon l'invention est plus particulièrement caractérisé, dans un plan vertical de coupe, dans sa position à l'issue de sa préparation selon le procédé de l'invention.

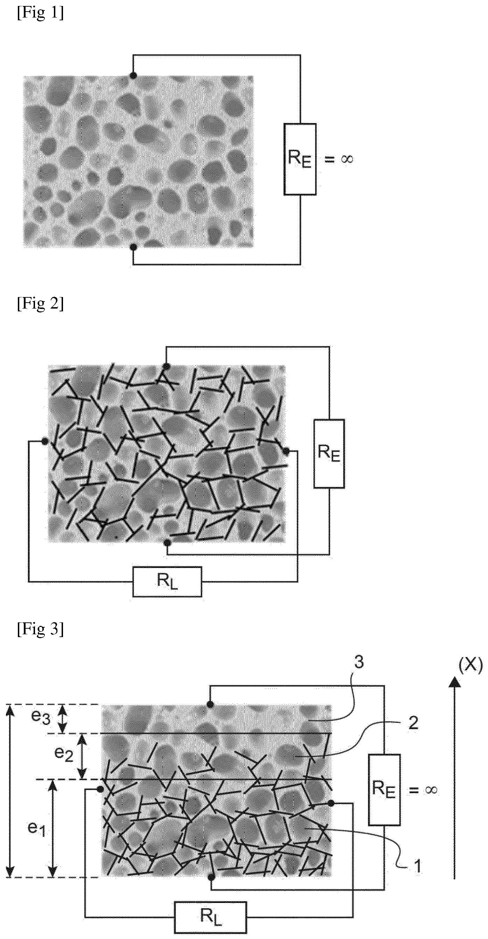

Comme représenté schématique en figure 3, l'aérogel selon l'invention présente ainsi une zone (1) donnée (correspondant à la partie inférieure de l'aérogel, observé dans sa position à l'issue de l'étape (iii)) présentant une concentration en nanoobjets métalliques, en particulier en nanofils métalliques, élevée ; et une zone (3) (correspondant à la partie supérieure de l'aérogel, observé dans sa position à l'issue de l'étape (iii)) présentant une très faible concentration en nanoobjets métalliques, voire exempte de nanoobjet métallique.

La quantité en nanoobjets métalliques, en particulier en nanofils métalliques, est avantageusement suffisante, dans la zone (1), pour former un réseau percolant, et permettre une bonne conduction électrique.

La zone (1) présentant une bonne conduction électrique peut par exemple s'étendre depuis la base de l'aérogel (observé à l'issue de sa préparation) sur une épaisseur (e₁), donnée selon la direction verticale, représentant de 1 à 99 %, en particulier de 5 à 50 %, de l'épaisseur totale (e) de l'aérogel formée.

L'épaisseur de l'aérogel s'entend de la dimension de l'aérogel dans la direction verticale (X).

Le ratio massique nanoobjets métalliques/polysaccharide(s), en particulier nanofils/polysaccharide(s), dans la zone (1) de l'aérogel présentant une bonne conduction électrique peut être compris entre 0,5 et 10, en particulier entre 1 et 5.

La conductivité électrique peut être appréciée par mesure de la résistance linéaire. En particulier, la zone présentant une bonne conduction électrique peut présenter avantageusement une résistance linéaire (R_{L}), mesurée par la méthode deux pointes placées à 1 cm, notée R2P^{1cm}, inférieure ou égale à 50Ω, en particulier inférieure ou égale à 15Ω. La méthode de mesure de la résistance linéaire, dite méthode deux pointes, consiste à mesurer la résistance de l'aérogel placé entre deux points conducteurs (lignes d'eutectique conducteur indium-gallium) espacées d' 1 cm.

Dans la zone (3) présentant un très faible taux en nanoobjets métalliques, voire exempte de nanoobjets métalliques, le ratio massique nanoobjets métalliques/polysaccharide(s), en particulier nanofils/polysaccharide(s), est plus particulièrement inférieure à 1, voire inférieure à 0,3. Cette zone (3) peut être qualifiée de zone isolante.

Cette zone isolante (3) peut par exemple s'étendre depuis la face supérieure de l'aérogel (observé à l'issue de sa préparation) sur une épaisseur (e₃), donnée selon la direction verticale, représentant de 1 à 99 %, en particulier de 5 à 50 %, de l'épaisseur totale (e) de l'aérogel formée.

L'aérogel selon l'invention, observé dans un plan vertical de coupe, à l'issue de sa préparation, peut présenter, entre les zones (1) et (3), une zone (2) intermédiaire, présentant notamment une un ratio massique nanoobjets métalliques/polysaccharide(s), en particulier nanofils/polysaccharide(s), comprise entre 0,3 et 10, en particulier entre 1 et 3.

Cette zone (2) présente notamment une résistance linéaire (R_{L}), en particulier comprise entre 15Ω et 1000Ω, notamment entre 50Ω et 500Ω. Cette zone intermédiaire peut s'étendre sur une épaisseur, donnée selon la direction verticale, (e2), représentant de 10 à 80% de l'épaisseur totale de l'aérogel, en particulier de 20 à 50 %.

L'aérogel selon l'invention ne présente pas de discontinuité au sein de son volume, notamment en termes de porosité ou de densité.

En particulier, l'aérogel selon l'invention présente, sur l'ensemble de son volume, une densité inférieure ou égale à 0,1 g/cm³, en particulier inférieure ou égale à 0,05 g/cm³, notamment comprise entre 10 et 30 mg/cm³. La densité peut être obtenue par pesée d'un échantillon d'aérogel de dimensions connues.

Il présente avantageusement une porosité ouverte élevée. La porosité ouverte correspond au volume des pores de la structure de l'aérogel qui communiquent avec la surface du matériau. Elle peut être évaluée par détermination de l'isotherme d'adsorption de l'azote ou analyse d'images obtenues notamment par tomographie X.

La porosité ouverte de la structure d'aérogel obtenu selon l'invention peut être plus particulièrement supérieure ou égale à 90 %, en particulier supérieure ou égale à 95 % et plus particulièrement comprise entre 96 et 99 %.

La structure poreuse du matériau obtenu peut être observée au microscope électronique à balayage.

L'aérogel obtenu selon l'invention présente par ailleurs de bonnes propriétés mécaniques, notamment en termes de flexibilité.

Les aérogels selon l'invention, en particulier autosupportés, et présentant un gradient de conduction électrique, peuvent trouver diverses applications. Ils peuvent être par exemple mis en œuvre en tant que film autosupporté conducteur utilisable notamment en tant que couche de basse émissivité, par exemple pour réfléchir sélectivement le rayonnement infra-rouge pour une application pour des vitrages dits intelligents, film conducteur ultralégers, par exemple pour des applications pour des capteurs de pression ou piézorésistifs ou dans l'électronique flexible et/ou étirable ou encore pour former des films chauffants.

Bien entendu, l'invention n'est pas limitée aux applications spécifiques évoquées ci-dessus ; et d'autres applications des aérogels selon l'invention peuvent être envisagées. L'invention va maintenant être décrite au moyen des exemples suivants, donnés bien entendu à titre illustratif et non limitatif de l'invention.

### Exemple

Dans les exemples qui suivent, les nanofils d'argent (AgNW) sont préalablement préparés selon le mode opératoire décrit dans la publication [6] (Environ. Sci. : Nano, 2019, 6, 684) pour des nanofils de 10 µm de longueur moyenne et de 60 nm de diamètre moyen.

La structure de la carboxyméthyl cellulose, CMC, est la suivante :

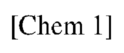

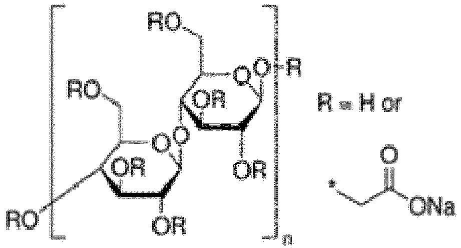

La masse molaire de la CMC utilisée est de 350 kg/mol.

### Exemple 1

### Aérogel de CMC à 1 % massique (comparatif)

Dans un flacon est dissous 1% massique de CMC dans de l'eau déionisée (EDI). Le mélange résultant est agité jusqu'à homogénéisation puis versé dans un moule (par exemple, moule en aluminium recouvert de PTFE).

Le mélange est congelé par immersion dans de l'azote liquide, puis inséré dans un lyophilisateur pendant au moins 17 heures pour sublimer les solvants.

### Exemple 2

### Aérogel de CMC et nanofils d'argent sans sédimentation à 1% massique et ratio AgNW :CMC de 1 (comparatif)

Dans un flacon est dissous 1% massique de CMC dans de l'EDI sous agitation à 100 rpm jusqu'à dissolution complète.

Une solution de AgNW 1 % massique dans l'EDI est préparée.

Un mélange iso-massique des deux solutions précédentes est préparé, puis agité jusqu'à obtenir une dispersion homogène des AgNWs.

La formulation est ensuite coulée dans un moule.

Le mélange est ensuite congelé par immersion dans de l'azote liquide puis inséré dans un lyophilisateur pendant au moins 17 heures pour sublimer les solvants.

### Exemple 3

### Aérogel de CMC et nanofils d'argent avec sédimentation (24 heures) à 1% massique et ratio AgNW :CMC de 1

Dans un flacon est dissous 1 % massique de CMC dans de l'eau déionisée sous agitation à 100 rpm jusqu'à dissolution complète.

Une solution de AgNW 1 % massique dans l'EDI est préparée.

Un mélange iso-massique des deux solutions précédentes est préparé, puis agité jusqu'à obtenir une dispersion homogène des AgNWs.

La formulation est ensuite coulée dans un moule.

Le moule rempli est fermé puis conservé 24 heures à température ambiante.

Le mélange est ensuite congelé par immersion dans de l'azote liquide puis inséré dans un lyophilisateur pendant au moins 17 heures pour sublimer les solvants.

### Exemple 4

### Aérogel de CMC et nanofils d'argent avec sédimentation (24 heures) à 1% massique et ratio AgNW :CMC de 2

Dans un flacon est dissous 0,7 % massique de CMC dans de l'eau déionisée sous agitation à 100 rpm jusqu'à dissolution complète.

Une solution de AgNW 1,3 % massique dans l'EDI est préparée.

Un mélange iso-massique des deux solutions précédentes est préparé, puis agité jusqu'à obtenir une dispersion homogène des AgNWs.

La formulation est ensuite coulée dans un moule.

Le moule rempli est fermé puis conservé 24 heures à température ambiante.

Le mélange est ensuite congelé par immersion dans de l'azote liquide puis inséré dans un lyophilisateur pendant au moins 17 heures pour sublimer les solvants.

### Exemple 5

### Aérogel de CMC et nanofils d'argent avec sédimentation longue (72 heures) à 1% massique et ratio AgNW :CMC de 1

Dans un flacon est dissous 1 % massique de CMC dans de l'eau déionisée sous agitation à 100 rpm jusqu'à dissolution complète.

Une solution de AgNW 1 % massique dans l'EDI est préparée.

Un mélange iso-massique des deux solutions précédentes est préparé, puis agité jusqu'à obtenir une dispersion homogène des AgNWs.

La formulation est ensuite coulée dans un moule.

Le moule rempli est fermé puis conservé 72 heures à température ambiante.

Le mélange est ensuite congelé par immersion dans de l'azote liquide puis inséré dans un lyophilisateur pendant au moins 17 heures pour sublimer les solvants.

### Exemple 6

### Aérogel de CMC et nanofils d'argent avec sédimentation très longue (120 heures) à 1% massique et ratio AgNW :CMC de 1

Dans un flacon est dissous 1 % massique de CMC dans de l'eau déionisée sous agitation à 100 rpm jusqu'à dissolution complète.

Une solution de AgNW 1 % massique dans l'EDI est préparée.

Un mélange iso-massique des deux solutions précédentes est préparé, puis agité jusqu'à obtenir une dispersion homogène des AgNWs.

La formulation est ensuite coulée dans un moule.

Le moule rempli est fermé puis conservé 120 heures à température ambiante.

Le mélange est ensuite congelé par immersion dans de l'azote liquide puis inséré dans un lyophilisateur pendant au moins 17 heures pour sublimer les solvants.

### Caractérisation des aérogels

### Méthodes de caractérisation

La densité est évaluée à partir des dimensions du matériau mesurées au pied à coulisse, et à la masse de l'aérogel, obtenue par pesée.

La mesure des résistances R_{2P}^{1cm} est effectuée par mesure de la résistance de l'aérogel posé entre deux lignes d'eutectique conducteur indium gallium espacées d'1 cm (méthode deux pointes).

Pour les échantillons d'aérogel préparés selon l'invention (exemples 3 à 6), la résistance (notée R_{H}) mesurée entre la base et le haut de l'échantillon, comme représenté sur les figures 1 à 3, est infinie.

La résistance mesurée entre les extrémités de l'échantillon selon un plan perpendiculaire à la direction de sédimentation, à environ 1 mm au-dessus de la base de l'échantillon, est indiquée dans le tableau 1 suivant.

Le tableau 1 suivant récapitules les compositions et propriétés des échantillons d'aérogel préparés selon les exemples 1 à 6.

**[Tableau 1]**

| Ex n° | [CMC] % massique | [AgNW] % massique | [Total] % massique | Ratio AgNW/CMC | divers | R_{2P}^{1cm} Ω | Densité mg/cm³ |
|---|---|---|---|---|---|---|---|
| 1 | 1 | - | 1 | - | isolant | OL | 14 |
| 2 | 0,5 | 0,5 | 1 | 1 | pas de sédimentation | 20 | 15 |
| 3 | 0,5 | 0,5 | 1 | 1 | Sédimentation 24h | 12 | 15 |
| 4 | 0,35 | 0,65 | 1 | 2 | Sédimentation 24h | 5 | 16 |
| 5 | 0,5 | 0,5 | 1 | 1 | Sédimentation longue 72h | 7 | 15 |
| 6 | 0,5 | 0,5 | 1 | 1 | Sédimentation très longue 120h | 3 | 15 |

Ces résultats mettent en évidence l'obtention, à l'issue du procédé de préparation selon l'invention, de matériaux poreux (aérogels) avec un gradient de conduction. On observe une amélioration de la conductivité du système pour des temps longs de sédimentation (de 24 à 72 heures), avec une diminution de la résistance mesurée d'un facteur d'environ 2.

Par ailleurs, en doublant le ratio AgNWs/CMC (de 1 à 2), il est possible d'abaisser encore la résistance du matériau, pour atteindre des densités de 15 mg/cm³ et des R_{2P}^{1cm} de 5Ω. Les densités des différents aérogels sont similaires ; cela témoigne de l'impact limité de l'incorporation des AgNWs sur la densité des aérogels.

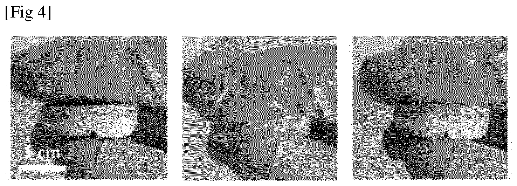

Enfin, les propriétés mécaniques des différents aérogels formés ont été testées macroscopiquement par compression manuelle. Les photographies de l'essai de compression pour l'aérogel de l'exemple 5 sont représentées en figure 4. L'ensemble des matériaux présentent de bonnes propriétés mécaniques, en particulier retrouvent leur forme initiale après relâchement de la force de compression.

### Liste des documents cités

[1] Kim et al., Nano Today 14 (2017) 100-123 ;
[2] Barrios et al., Polymers 2019, 11, 726 ;
[3] Wan et al., Chemical Engineering Journal 359 (2019) 459-475 ;
[4] Budtova et al., Cellulose (2019) 26:81-121;
[5] J. Huang et al., Chem. Eng. J., vol. 364, p. 28-36, mai 2019 ;
[6] P. Yan et al., Small, vol. 13, n° 38, p. 1701756, oct. 2017;
[7] Z. Zeng et al., ACS Appl. Mater. Interfaces, vol. 9, n° 37, p. 32211-32219, sept. 2017;
[8] Wang et al. Progress in Organic Coatings 140 (2020) 105507;
[9] Toybou et al., Environ. Sci. : Nano, 2019, 6, 684.

## Revendications

1. Procédé de préparation d'un aérogel, présentant un gradient de conduction électrique, comprenant au moins les étapes suivantes :
(i) disposer d'une formulation comprenant au moins un polysaccharide solubilisé et des nanoobjets métalliques en dispersion dans un milieu solvant aqueux ou hydroalcoolique, lesdits nanoobjets métalliques présentant un facteur de forme supérieur ou égal à 2, en particulier étant des nanofils métalliques ;
(ii) laisser la formulation de l'étape (i) décanter dans des conditions propices à l'établissement d'un gradient de concentration en nanoobjets au sein de la matrice polymérique formée par le ou lesdits polysaccharides ; et
(iii) éliminer ledit milieu solvant par lyophilisation pour obtenir ledit aérogel présentant un gradient vertical de conduction électrique

2. Procédé selon la revendication précédente, dans lequel le ou lesdits polysaccharides sont choisis parmi la cellulose et ses dérivés, notamment les éthers de cellulose tels que la carboxyméthylcellulose (CMC), l'hydroxyéthylcellulose (HEC), l'hydroxyméthylcellulose (HMC), l'hydroxypropylcellulose (HPC), l'hydroxypropyl méthyl cellulose (HPMC), l'hydroxyéthyl méthyl cellulose (HEMC) ; les nanocristaux de cellulose cristallins (NCC ou CNC), les microfibrilles (ou microfibres) de cellulose (MFC) semi-cristallines et nanofibrilles (ou nanofibres) de cellulose (NFC); la chitine, le chitosane, les alginates, en particulier parmi la cellulose et ses dérivés et plus particulièrement la carboxyméthylcellulose.

3. Procédé selon l'une quelconque des revendications précédentes, dans lequel le ou lesdits polysaccharides présentent une masse moléculaire comprise entre 40 kg/mol et 1300 kg/mol, en particulier entre 90 et 700 kg/mol.

4. Procédé selon l'une quelconque des revendications précédentes, dans lequel lesdits nanoobjets métalliques présentent un facteur de forme supérieur ou égal à 10, notamment supérieur ou égal à 50 et en particulier compris entre 100 et 40 000.

5. Procédé selon l'une quelconque des revendications précédentes, dans lequel lesdits nanoobjets métalliques sont des nanofils métalliques, en particulier présentant une longueur moyenne comprise entre 1 µm et 1000 µm, notamment entre 2 µm et 500 µm et un diamètre moyen compris entre 20 nm et 500 nm et notamment entre 30 nm et 100 nm, et notamment choisis parmi des nanofils à base d'argent, d'or, de cuivre, de nickel, de palladium et/ou de platine, en particulier sont des nanofils d'argent.

6. Procédé selon l'une quelconque des revendications précédentes, dans lequel ladite formulation en étape (i) est obtenue par mélange :
- d'une solution du ou desdits polysaccharides dans un milieu solvant aqueux, noté S1, en particulier formé d'eau et, éventuellement d'un ou plusieurs solvants choisis parmi les alcools en particulier en C₁ à C₅, tels que le méthanol, l'éthanol, l'isopropanol, le tert-butanol et leurs mélanges ; et
- d'une dispersion desdits nanoobjets métalliques, en particulier desdits nanofils métalliques, dans un milieu solvant, noté S2, aqueux, alcoolique ou hydroalcoolique, en particulier dans l'eau.

7. Procédé selon l'une quelconque des revendications précédentes, dans lequel le milieu solvant de la formulation en étape (i) comprend de l'eau et, éventuellement, un ou plusieurs solvants choisis parmi les alcools, en particulier en C₁ à C₅, tels que le méthanol ou de l'isopropanol.

8. Procédé selon l'une quelconque des revendications précédentes, dans lequel le milieu solvant de la formulation en étape (i) comprend au moins un additif cryoprotectant, en particulier choisi parmi le glycérol, l'éthylène glycol, le diméthylsulfoxyde (DMSO), le tert-butanol et leurs mélanges.

9. Procédé selon l'une quelconque des revendications précédentes, dans lequel le ou lesdits polysaccharides sont présents en une teneur comprise entre 0,05 % et 15 % massique, en particulier entre 0,3 et 2 % massique, par rapport à la masse totale de ladite formulation en étape (i) et/ou lesdits nanoobjets métalliques, en particulier les nanofils métalliques, sont présents en une teneur comprise entre 0,01 et 10 %, en particulier entre 0,5 et 1 % massique, par rapport à la masse totale de ladite formulation.

10. Procédé selon l'une quelconque des revendications précédentes, dans lequel la formulation en étape (ii) est laissée décanter dans un récipient ayant la forme et les dimensions souhaitées pour l'aérogel.

11. Procédé selon l'une quelconque des revendications précédentes, dans lequel la décantation en étape (ii) est opérée pendant une durée inférieure ou égale à 200 heures, en particulier comprise entre 20 heures et 150 heures et plus particulièrement entre 12 heures et 120 heures.

12. Procédé selon l'une quelconque des revendications précédentes, dans lequel l'élimination du milieu solvant en étape (iii) est opérée *via* les étapes successives suivantes :
- solidification du milieu solvant de ladite dispersion par abaissement de la température de ladite dispersion en-dessous du point de fusion dudit milieu solvant ; et
- sublimation sous vide dudit milieu solvant solidifié pour former un aérogel.

13. Aérogel monobloc à gradient de conduction électrique, en particulier tel qu'obtenu selon le procédé de l'une quelconque des revendications 1 à 12, comprenant des nanoobjets métalliques présentant un facteur de forme supérieur ou égal à 2, en particulier tels que définis en revendication 4 ou 5, dans une matrice polymérique à base de polysaccharide(s), ledit aérogel présentant un gradient de concentration desdits nanoobjets métalliques.

14. Aérogel selon la revendication 13, ledit aérogel présentant, sur l'ensemble de son volume, une densité inférieure ou égale à 0,1 g/cm³, en particulier inférieure ou égale à 0,05 g/cm³, notamment comprise entre 10 et 30 mg/cm³.

15. Utilisation d'un aérogel tel que défini en revendication 13 ou 14, en tant que film autosupporté conducteur utilisable comme couche de basse émissivité, par exemple pour réfléchir sélectivement le rayonnement infra-rouge pour une application pour des vitrages dits intelligents, comme film conducteur pour un dispositif chauffant ou comme matériau pour un capteur de pression ou un capteur piézorésistif.
